# EUROPEAN PATENT SPECIFICATION

(11) **EP 2 957 577 B1**
(45) Date of publication and mention of the grant of the patent: **27.11.2019**
(21) Application number: 14173115.8
(22) Date of filing: 19.06.2014
(51) Int. Cl.: C08F 220/10, C08K 5/00, C09J 4/00

(54) **CURABLE PRESSURE-SENSITIVE ADHESIVE COMPOSITIONS**
HÄRTBARE DRUCKEMPFINDLICHE KLEBSTOFFZUSAMMENSETZUNGEN
COMPOSITIONS D'ADHÉSIF AUTOCOLLANT DURCISSABLE

(43) Date of publication of application: 23.12.2015
(73) Proprietor: 3M Innovative Properties Company, Saint Paul, MN 55133-3427 (US)
(72) Inventor: Schuell, Christoph, 41453 Neuss (DE); Unverhau, Kerstin, 41453 Neuss (DE); Richter, Mareike, 41453 Neuss (DE); Goeb, Siegfried Rainer, 41453 Neuss (DE)
(74) Representative: Gabriel, Kiroubagaranne

(56) References cited:
- EP-A1- 0 566 093
- JP-A- 2007 254 617
- KR-A- 20090 132 548
- US-A- 4 605 465
- US-A1- 2012 121 881

## Description

### Technical Field

The present disclosure relates generally to the field of adhesives, more specifically to the field of pressure sensitive adhesives (PSA). The present disclosure also relates to a method of manufacturing such pressure sensitive adhesives and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

It is commonly known in the art of manufacturing pressure sensitive adhesives that various methods are available for the production of PSAs through polymerization of a suitable curable precursor. These known methods include, solution polymerization, emulsion polymerization, suspension polymerization, actinic radiation-induced polymerization (e.g. by UV or high energy particulate matter irradiation) and thermally-induced polymerization. The known polymerization methods all have their own advantages and limitations, and shall be used on a case-by-case basis depending on the ultimate targeted application and envisaged usage of the prepared pressure sensitive adhesives.

More recently, thermally-induced polymerization and in particular actinic radiation-induced polymerization methods have emerged as particularly suitable for manufacturing pressure sensitive adhesives, as these techniques generally do not involve (or involve to a less extent) additional processing steps such as e.g. usage, recovery or management of solvents and/or volatile organic compounds, which are generally required when using solution, emulsion or suspension polymerization techniques.

With broadened use of pressure-sensitive adhesive tapes over the years, performance requirements have become more demanding. Shear holding capability, for example, which originally was intended for applications supporting modest loads at room temperature, has now increased substantially for many applications in terms of operating temperature and load. Similarly, an increasing demand has arised for thick and highly pigmented PSA tapes, which are highly desirable in various applications, in particular for construction and automotive applications. In particular, there is currently a lack of effective and viable approaches for manufacturing thick and dark colored PSA tapes, in particular PSA foam tapes.

One major limitation of actinic radiation-induced polymerization methods, in particular UV photopolymerization methods, is the restriction to use only non-radiation-absorbing additives and components during the actinic radiation-induced curing step. Radiation-absorbing additives and components may indeed compete with the radiation-absorption of the polymerization initiator, which leads to insufficient polymerization initiation incomplete, incomplete curing and generally results in PSA tapes with unsatisfying properties. Moreover, when thick PSA tapes are desired, the use of actinic radiation-induced polymerization methods, in particular UV photopolymerization methods, is generally not precognized as uneven polymerization from the front surface to the back surface of an irradiated PSA curable composition typically occurs due to absorption of the actinic radiation by the curable composition through the thickness of the PSA composition. This generally results in a gradient in the conversion, molecular weight and molecular weight distribution through the thickness of the cured material, which can again lead to inferior performance of the resulting PSA product.

Accordingly, when PSA tapes containing radiation-absorbing additives are desired, such as e.g. pigmented PSA tapes, only small added amounts of radiation-absorbing additives are acceptable. Increasing the radiation-absorbing additives content may lead to insufficient deep-curing of the curable composition and may therefore limit the thickness of the final PSA tape construction, due to the radiation-absorbing property of the additives used in the manufacture of PSA tapes.

It is therefore a recognized and continuous challenge in the adhesive tapes industry to provide improved polymerization methods and systems suitable for manufacturing PSA tapes containing radiation-absorbing additives (such as e.g. pigments), in particular thick PSA tapes having a relatively high radiation-absorbing additives content and combining good adhesion and good cohesion properties.

A partial solution has been described e.g. in US 4,605,465 (Morgan), whereby a UV and thermally curable, thermoplastic-containing composition is described, and wherein the curable composition comprises a conventional thermal initiator and a photoinitiator. The activation of the polymerization initiator system described in US 4,605,465, requires exposure of the curable composition to UV radiation followed by an active external heating step at a temperature of at least 80°C, in order to form a fully cured product. Moreover, pressure sensitive adhesive compositions are not disclosed in that reference.

US-A1-2012/0121881 (Kim et al.) describes a method for manufacturing an acrylic film and an acrylic film manufactured by the same. KR20090132548 (Kim et al.) discloses a pressure sensitive adhesive composition comprising a base resin, a photoinitiator and a thermoinitiator; wherein the base resin is an acrylic copolymer consisting of a (meth)acrylic acid ester-based monomer and a crosslinkable functional group-containing monomer.

Without contesting the technical advantages associated with the polymerization methods and systems known in the art for producing pressure sensitive adhesives, there is still a need for industrially viable solutions for the production of thick pressure sensitive adhesive tapes having relatively high radiation-absorbing additives content and provided with an excellent and versatile balance of adhesive and cohesive properties.

Other advantages of the pressure sensitive adhesives, polymerization initiator systems, and methods of the invention will be apparent from the following description.

### Summary

According to one aspect, the present disclosure relates to a curable precursor of a pressure sensitive adhesive composition comprising:
(1) a free-radically polymerizable material comprising at least one free-radically polymerizable monomer;
(2) a polymerization initiator system, comprising:
   a) a thermal redox initiator system, consisting of:
      i. a thermal polymerization initiator comprising an organic peroxide; and
      ii. an accelerator selected from the group consisting of tertiary amines, metal salts, mercaptans, and any combinations or mixtures thereof; and
   b) a photoinitiator; and
wherein the thermal redox initiator system has an activation temperature above which it is capable of producing free radicals upon heating and thermally initiate polymerization of the free-radically polymerizable material, and wherein the curable precursor comprises a photoinitiator in an amount effective for the photoinitiator, upon actinic irradiation, to initiate polymerization of the free-radically polymerizable material and increase the temperature of the curable precursor above the activation temperature of the thermal redox initiator system.

In another aspect, the present disclosure relates to a method of curing a precursor of a pressure sensitive adhesive composition, comprising the steps of:
a) providing a curable precursor as described above; and
b) curing the curable precursor, thereby forming a cured pressure sensitive adhesive composition.

According to still another aspect, the present disclosure relates to the use of a curable precursor of a pressure sensitive adhesive as above described, for industrial applications, in particular for construction applications and automotive applications.

### Detailed description

According to a first aspect, the present disclosure relates to a curable precursor of a pressure sensitive adhesive composition comprising:
(1) a free-radically polymerizable material comprising at least one free-radically polymerizable monomer;
(2) a polymerization initiator system, comprising:
   a) a thermal redox initiator system, consisting of:
      i. a thermal polymerization initiator comprising an organic peroxide; and
      ii. an accelerator selected from the group consisting of tertiary amines, metal salts, mercaptans, and any combinations or mixtures thereof; and
   b) a photoinitiator; and
wherein the thermal redox initiator system has an activation temperature above which it is capable of producing free radicals upon heating and thermally initiate polymerization of the free-radically polymerizable material, and wherein the curable precursor comprises a photoinitiator in an amount effective for the photoinitiator, upon actinic irradiation, to initiate polymerization of the free-radically polymerizable material and increase the temperature of the curable precursor above the activation temperature of the thermal redox initiator system.

In the context of the present disclosure, it has surprisingly been found that a curable precursor of a pressure sensitive adhesive as described above, is outstandingly suitable for producing thick and highly pigmented pressure sensitive adhesive tapes provided with an excellent and versatile balance of adhesive and cohesive properties. Without wishing to be bound by theory, it is believed that this outstanding suitability is provided in particular by the polymerization initiator system comprising a thermal redox initiator system consisting of the particular combination of a thermal polymerization initiator comprising an organic peroxide and an accelerator selected from the group consisting of tertiary amines, metal salts, mercaptans, and any combinations or mixtures thereof.

The curable precursor of a pressure sensitive adhesive of the present disclosure may be, in some instances, (pre)polymerized and cured in-place to produce a pressure sensitive adhesive provided with excellent characteristics directly on the desired substrate or article.

The use of the curable precursor composition and method of the present disclosure affords a number of advantages when compared to conventional polymerization methods and systems, such as e.g. those based on single-component thermally-induced polymerization initiators, single-component actinic radiation-induced initiators, or even on hybrid polymerization initiator systems comprising a single-component thermally-induced polymerization initiator (such as e.g. azo-type compounds, persulfates or organic peroxides) and a polymerization photoinitiator. These advantages include, but are not limited to, low activation temperature of the polymerization initiator system, safe handling of the compounds and compositions especially before coating of the curable precursor composition, excellent storage stability and enhanced control on the balance of stability and reactivity properties of the curable precursor composition, possibility to use catalytic amounts of polymerization initiators, and ability to perform full curing of the curable precursor by short initiation with suitable triggering actinic radiation energy (e.g. UV light) without the necessity to provide an additional source of triggering energy (such as external thermal energy) until the curing is completed.

In addition, the cured pressure sensitive adhesives exhibit high peel strength, high cohesive strength, high temperature shear strength, and excellent stress relaxation properties. The pressure-sensitive adhesives according to the present disclosure, i.e. in the cured state, provide the desired balance of tack, peel adhesion, and shear holding power.

The pressure sensitive adhesives according to the disclosure may find particular use for construction applications, aerospace applications, and automotive applications, in particular for taped seal on body and weather-strip tape applications for the automotive industry.

In the context of the present disclosure, the expression "thermal redox initiator system" is meant to refer to a polymerization initiator system based upon a redox reaction, whereby a thermal polymerization initiator, acting as an oxidizing agent, is coupled to a corresponding reducing agent (also referred to hereinafter as accelerator), which functions to promote the decomposition of the thermal polymerization initiator through a redox reaction and thereby facilitates the generation of active radicals.

As used herein, the term "alkyl (meth)acrylate" and "alkyl (meth)acrylate ester" are used interchangeably. The term "(meth)acrylate" refers to an acrylate, methacrylate, or both. The term "(meth)acrylic" refers to methacrylic, acrylic, or both. A (meth)acrylic-based" material refers to one prepared from one or more monomers having a (meth)acryloyl group, which is a group of formula CH₂=C(R)-(CO)- where R is hydrogen or methyl.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl and 2-propylheptyl, .

As used herein, the term "heteroalkyl" includes both straight-chained, branched, and cyclic alkyl groups with one or more heteroatoms independently selected from S, O, and N with both unsubstituted and substituted alkyl groups. Unless otherwise indicated, the heteroalkyl groups typically contain from 1 to 20 carbon atoms. "Heteroalkyl" is a subset of "hydrocarbyl containing one or more S, N, O, P, or Si atoms" described below. Examples of "heteroalkyl" as used herein include, but are not limited to, methoxy, ethoxy, propoxy, 3,6-dioxaheptyl, 3-(trimethylsilyl)-propyl, 4-dimethylaminobutyl, and the like. Unless otherwise noted, heteroalkyl groups may be mono- or polyvalent.

As used herein, "aryl" is an aromatic group containing 6-18 ring atoms and can contain optional fused rings, which may be saturated, unsaturated, or aromatic. Examples of an aryl groups include phenyl, naphthyl, biphenyl, phenanthryl, and anthracyl. Heteroaryl is aryl containing 1-3 heteroatoms such as nitrogen, oxygen, or sulfur and can contain fused rings. Some examples of heteroaryl groups are pyridyl, furanyl, pyrrolyl, thienyl, thiazolyl, oxazolyl, imidazolyl, indolyl, benzofuranyl, and benzthiazolyl. Unless otherwise noted, aryl and heteroaryl groups may be mono- or polyvalent.

As used herein, "(hetero)hydrocarbyl" is inclusive of hydrocarbyl alkyl and aryl groups, and heterohydrocarbyl heteroalkyl and heteroaryl groups, the later comprising one or more catenary oxygen heteroatoms such as ether or amino groups. Heterohydrocarbyl may optionally contain one or more catenary (in-chain) functional groups including ester, amide, urea, urethane, and carbonate functional groups. Unless otherwise indicated, the non-polymeric (hetero)hydrocarbyl groups typically contain from 1 to 60 carbon atoms. Some examples of such heterohydrocarbyls as used herein include, but are not limited to, methoxy, ethoxy, propoxy, 4-diphenylaminobutyl, 2-(2'-phenoxyethoxy)ethyl, 3,6-dioxaheptyl, 3,6-dioxahexyl-6-phenyl, in addition to those described for "alkyl", "heteroalkyl", "aryl", and "heteroaryl" *supra.*

The curable precursor of a pressure sensitive adhesive composition according to the present disclosure comprises a free-radically polymerizable material comprising at least one free-radically polymerizable monomer.

In a typical aspect, the at least one free-radically polymerizable monomer, used herein for forming the free-radically polymerizable material, comprises ethylenically unsaturated monomer(s).

According to a particular aspect of the present disclosure, the free-radically polymerizable monomer for use herein is selected from the group consisting of (meth)acrylate esters, (meth)acrylate monoesters of polyhydroxy alkyl alcohols, multifunctional (meth)acrylate esters, macromeric (meth)acrylates, (meth)acrylic acids and their salts, nitrogen-bearing monomers, dibasic acid monomers, vinyl esters, styrenes and ring-substituted styrenes, vinyl halides and vinylidene halides, vinyl ethers, and any combinations or mixtures thereof.

In a preferred aspect, the free-radically polymerizable monomer for use herein, comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

According to a preferred aspect, the free-radically polymerizable monomer for use herein is selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, (meth)acrylate esters of 2-alkyl alkanols wherein the molar carbon number average of the 2-alkyl alkanols is 12 to 32, and any combinations or mixtures thereof.

In a more preferred aspect, the free-radically polymerizable monomer for use herein is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate (IOA), 2-ethylhexyl acrylate (2-EHA), 2-octyl acrylate (2-OA) and 2-propylheptyl acrylate (2-PHA). In a particularly preferred aspect, the free-radically polymerizable monomer for use herein comprises or consists of 2-ethylhexyl acrylate.

According to an alternative aspect, the free-radically polymerizable monomer for use herein is selected to comprise 2-octyl(meth)acrylate. Polymer base material derived from 2-octyl (meth)acrylate provides comparable adhesive properties when compared with other isomers of octyl (meth)acrylate, such as n-octyl and isooctyl. Further, the pressure sensitive adhesive compositions typically have lower inherent and solution viscosities when compared to adhesive compositions derived from other octyl isomers, such as isooctyl acrylate, at the same concentrations, and under the same polymerization conditions.

The 2-octyl (meth)acrylate may be prepared by conventional techniques from 2-octanol and (meth)acryloyl derivates such as esters, acids and acyl halides. The 2-octanol may be prepared by treatment of ricinoleic acid, derived from castor oil, (or ester or acyl halide thereof) with sodium hydroxide, followed by distillation from the co-product sebacic acid.

It is however preferred that the 2-octyl(meth)acrylate monomer for use herein is at least partly, preferably completely (i.e. 100 wt%) derived from biological material, more preferably from a plant material. This may advantageously be used to provide adhesive films/tapes which are at least partly derived from "green" sources, which is ecologically more sustainable and also reduces the dependency on mineral oil and the price development.

In the context of the present disclosure, the term "derived from biological material" is meant to express that from a certain chemical ingredient, at least a part of its chemical structure comes from biological materials, preferably at least 50 wt% of its structure. This definition is in principle the same as for bio-diesel fuel, in which usually only the fatty acid part originates from biological sources whereas the methanol may also be derived from fossil material like coal or mineral oil.

Accordingly, in one particular aspect, at least 50 wt%, at least 75 wt%, or even 100 wt% of the chemical structure of the 2-octyl(meth)acrylate is at least partly, preferably completely (i.e. 100 wt%) derived from biological material, more preferably from a plant material.

The free-radically polymerizable monomer(s) for use herein, in particular the (meth)acrylate ester monomer(s), may be present in the free-radically polymerizable material, in any suitable amounts. In some exemplary aspects, the free-radically polymerizable monomer(s) are present in amounts up to 100 parts by weight, up to 90 parts by weight, or even up to 80 parts by weight of the polymerizable material. In some other exemplary aspects, this amount is typically of at least 50 parts by weight, or at least 60 parts by weight of the polymerizable material.

Accordingly, in some exemplary aspects, the free-radically polymerizable monomer(s) are present in amounts in a range of from 50 to 100 parts, from 60 to 95 parts by weight, from 65 to 90 parts, or even from 65 to 80 parts by weight of the free-radically polymerizable material.

According to a particular aspect, the free-radically polymerizable material for use herein may further comprise an optional co-monomer having an ethylenically unsaturated group. Suitable co-monomer(s) having an ethylenically unsaturated group for use herein will be easily identified by those skilled in the art, in the light of the present description. As such, co-monomer(s) having an ethylenically unsaturated group for use herein are not particularly limited.

In one typical aspect, the co-monomer(s) having an ethylenically unsaturated group include, but are not limited to, the group of polar monomers, in particular acid or non-acid functional polar monomers.

In an advantageous aspect of the present disclosure, the co-monomer(s) having an ethylenically unsaturated group are selected from the group of acid functional polar monomers having a single ethylenically unsaturated group. In a preferred aspect, the co-monomer(s) having an ethylenically unsaturated group comprises acrylic acid (co)monomer(s).

The co-monomer(s) having an ethylenically unsaturated group for use herein may be present in the (co)polymerizable material, in any suitable amounts. In some exemplary aspects, the co-monomer(s) having an ethylenically unsaturated group are present in amounts up to 40 parts by weight, up to 35 parts by weight, or even up to 30 parts by weight of the (co)polymerizable material. In some other exemplary aspects, this amount is typically of at least 2 parts by weight, or at least 5 parts by weight of the free-radically (co)polymerizable material.

Accordingly, in some exemplary aspects, the co-monomer(s) having an ethylenically unsaturated group are present in amounts in a range of from 0 to 40 parts, from 5 to 35 parts by weight, or even from 20 to 35 parts by weight of the (co)polymerizable material. In some other exemplary aspects, the co-monomer(s) having an ethylenically unsaturated group are present in amounts in a range of from 0 to 20 parts, from 5 to 15 parts by weight, or even from 5 to 10 parts by weight of the free-radically (co)polymerizable material.

In a particular aspect of the curable precursor of the present disclosure, the (co)polymerizable material comprises:
a) from 60 to 100 parts by weight, from 70 to 95 parts by weight, from 80 to 95 parts by weight or even from 85 to 95 parts by weight, of a free-radically polymerizable monomer, in particular a (meth)acrylate ester monomer(s); and
b) optionally, from 0 to 40 parts by weight, from 5 to 30 parts by weight, from 5 to 20 parts by weight or even from 5 to 15 parts by weight, of a co-monomer having an ethylenically unsaturated group, in particular acrylic acid monomer(s).

The curable precursor of a pressure sensitive adhesive composition according to the present disclosure further comprises a polymerization initiator system, comprising:
a) a thermal redox initiator system, and
   i. a thermal polymerization initiator comprising an organic peroxide; and
   ii. an accelerator selected from the group consisting of tertiary amines, metal salts, mercaptans, and any combinations or mixtures thereof; and
b) a photoinitiator; and
wherein the thermal redox initiator system has an activation temperature above which it is capable of producing free radicals upon heating and thermally initiate polymerization of the free-radically polymerizable material, and wherein the curable precursor comprises a photoinitiator in an amount effective for the photoinitiator, upon actinic irradiation, to initiate polymerization of the free-radically polymerizable material and increase the temperature of the curable precursor above the activation temperature of the thermal redox initiator system.

The thermal polymerization initiator for use herein comprises an organic peroxide. Any organic peroxides known to be suitable to act as thermal polymerization initiators may be used in the context of the present disclosure. Suitable organic peroxides for use herein may be easily identified by those skilled in the art in the light of the present disclosure. Exemplary organic peroxides for use herein, include, but are not limited to, those selected from the group consisting of diacyl peroxides, dialkyl peroxides, hydroperoxides, ketone peroxides, and any mixtures thereof. According to a preferred aspect of the present disclosure, the organic peroxide for use herein is selected from the group of diacyl peroxides, more preferably benzoyl peroxide.

The thermal redox initiator system for use herein further comprises an accelerator of thermal redox polymerization initiation. The accelerator for use herein is selected from the group consisting of tertiary amines, metal salts, mercaptans, and any combinations or mixtures thereof. Suitable metal salts for use herein include, but are not limited to, cobalt naphthenate and vanadium octoate. Suitable mercaptans for use herein include, but are not limited to, dimercaptoacetates. Suitable tertiary amines include, but are not limited to, dimethyl-p-toluidine, diisopropoxy-p-toluidine, diethyl-p-toluidine, dimethylaniline, 2,2'-(4-Methylphenylimino)diethanol, and any mixtures thereof.

According to a preferred aspect of the present disclosure, the accelerator for use herein is selected from the group of tertiary amines, in particular those selected from the group consisting of tertiary aromatic amines. In a preferred aspect, the accelerator for use herein is selected from the group of tertiary aromatic amines having the following formula: 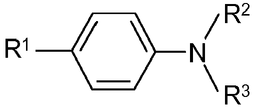 wherein
R¹ is an H or C₁-C₄ alkyl group, preferably methyl,
R² is an H, C₁-C₄ alkyl group, or a heteroalkyl, and
R³ is identical or distinct from R², and is an H, C₁-C₄ alkyl group, or a heteroalkyl.

According to still a preferred aspect of the present disclosure, the accelerator for use herein has the above-described formula, wherein R¹ = R² = R³ = methyl, and according to which the accelerator is selected to be dimethyl-p-toluidine.

According to still another preferred aspect of the present disclosure, the accelerator for use herein has the above-described formula, wherein R¹ = H and R² = R³ = methyl, and according to which the accelerator is selected to be dimethylaniline.

According to yet another preferred aspect of the present disclosure, the accelerator for use herein has the above-described formula, wherein R¹ = methyl, and R² = R³ = -CH₂-CH₂OH, and according to which the accelerator is selected to be 2,2'-(4-Methylphenylimino)diethanol.

In the context of the present disclosure, the thermal redox initiator system for use herein has an activation temperature above which it is capable of producing free radicals upon heating and thermally initiate polymerization of the free-radically polymerizable material. In that context, and according to a typical aspect, the curable precursor of the present disclosure further comprises a photoinitiator in an amount effective for the photoinitiator, upon actinic irradiation, to initiate polymerization of the free-radically polymerizable material and thereby increasing the temperature of the curable precursor above the activation temperature of the thermal redox initiator system.

According to a particular aspect of the present disclosure, the activation temperature of the thermal redox initiator system is preferably below 100°C, below 90°C, below 80°C, below 60°C, below 50°C, below 40°C, or even below 30°C. Preferably, the activation temperature of the thermal redox initiator system is comprised between 20 and 100°C, between 25 and 90°C, between 30 and 80°C, between 30 and 70°C, between 30 and 60°C, or even between 40 and 60°C.

In a typical aspect, thermal redox initiator system is comprised in the curable precursor of the present disclosure preferably in an amount comprised between 0.01 and 1.5 pphw, between 0.02 and 1.0 pphw, between 0.03 and 0.5 pphw, between 0.04 and 0.2 pphw, or even between 0.05 and 0.1 pphw, by weight of the free-radically polymerizable monomers.

According to another particular aspect of the curable precursor of the present disclosure, the ratio thermal polymerization initiator: accelerator is preferably comprised between 5:1 and 1:1, between 4:1 and 1:1, between 3:1 and 1:1, between 2.5:1 and 1.5:1, or even of about 2:1.

The thermal polymerization initiator for use herein is preferably comprised in the curable precursor in an amount comprised between 0.01 and 1.0 pphw, between 0.02 and 0.8 pphw, between 0.03 and 0.6 pphw, between 0.04 and 0.2 pphw, between 0.04 and 0.1 pphw, or between 0.04 and 0.08 pphw, by weight of the free-radically polymerizable monomers.

According to still a particular aspect of the present disclosure, the accelerator for use herein is preferably comprised in the curable precursor in an amount comprised between 0.005 and 1.0 pphw, between 0.005 and 0.8 pphw, between 0.01 and 0.6 pphw, between 0.01 and 0.4 pphw, between 0.01 and 0.2 pphw, between 0.01 and 0.05 pphw, or even between 0.01 and 0.1 pphw, by weight of the free-radically polymerizable monomers.

The polymerization initiator system for use herein further comprises a photoinitiator. Any photoinitiators known for initiating polymerization under ultraviolet light may be used in the context of the present disclosure. Suitable photoinitiators for use herein may be easily identified by those skilled in the art, in the light of the present disclosure.

Useful photoinitiators for use herein include substituted acetophenones such as benzyl dimethyl ketal and 1-hydroxycyclohexyl phenyl ketone, substituted alpha-ketols such as 2-methyl-2-hydroxypropiophenone, benzoin ethers such as benzoin methyl ether, benzoin isopropyl ether, substituted benzoin ethers such as anisoin methyl ether, aromatic sulfonyl chlorides, photoactive oximes, azo-type initiators, and any combinations or mixtures thereof. Other useful photoinitiators for use herein include benzoin ethers such as benzoin methyl ether and benzoin isopropyl ether; substituted acetophenones such as 2, 2-dimethoxyacetophenone, available as Irgacure™ 651 photoinitiator (Ciba- Geigy Corp.; Ardsley, NY), 2,2 dimethoxy-2-phenyl-1-phenylethanone, available as Esacure™ KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; phosphine oxides such as Irgacure™ 819; and photoactive oximes such as 1-phenyl-1,2-propanedione-2-(O-ethoxycarbonyl)oxime. Particularly preferred among these are the substituted acetophenones. Preferred photoinitiators are photoactive compounds that undergo a Norrish I cleavage to generate free radicals that can initiate by addition to the acrylic double bonds.

In a preferred aspect, the photoinitiators for use herein, include, but are not limited to, those selected from the group of type (I) photoinitiators (α-cleavage agents), in particular those selected from the group consisting of dialkoxyacetophenones, 2-phenylacetophenones, 2,2-dialkoxy-2-phenylacetophenones, and any mixtures thereof.

According to a particularly preferred aspect of the curable precursor of the present disclosure, the photoinitiator is selected from the group of 2,2-dialkoxy-2-phenylacetophenones, in particular 2,2-methoxy-2-phenylacetophenone.

The photoinitiator may be typically used in an amount comprised between 0.01 and 2.0 pphw, between 0.05 and 1.5 pphw, between 0.05 and 1.0 pphw, between 0.1 and 0.8 pphw, or between 0.1 and 0.5 pphw, by weight of the free-radically polymerizable monomers.

In still another particular aspect of the curable precursor of the present disclosure, the ratio photoinitiator : thermal redox initiator system is comprised between 5:1 and 1:5, between 4:1 and 1:4, between 4:1 and 1:2, between 4:1 and 1:1, or even between 4:1 and 2:1.

The free-radically polymerizable material for use herein may optionally further comprise chain transfer agents to control the molecular weight of the resultant polymer. Examples of useful chain transfer agents include but are not limited to those selected from the group consisting of carbon tetrabromide, alcohols, mercaptans, and mixtures thereof. When present, the preferred chain transfer agents are isooctylthioglycolate and carbon tetrabromide. The free-radically polymerizable mixture may further comprise up to about 0.5 parts by weight of a chain transfer agent, typically about 0.01 to about 0.5 parts by weight, if used, preferably about 0.05 parts by weight to about 0.2 parts by weight, based upon 100 parts by weight of the total monomer mixture.

The curable precursor of a pressure sensitive adhesive composition according to the disclosure, may in some aspects further comprise a filler material which is preferably selected from the group consisting of filler particles, in particular expanded perlite, microspheres, expendable microspheres, glassbeads, glass microspheres, silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof. The disclosure is however not that limited as alternative filler material may be easily identified by those skilled in the art, in the light of the present disclosure. In a particular aspect, the filler material, in particular the particulate filler material comprises hollow glass microspheres.

The filler material for use herein may be present in the curable precursor of a pressure sensitive adhesive, in any suitable amounts. In some exemplary aspects, the filler material is present in amounts up to 30 parts by weight, up to 25 parts by weight, or even up to 20 parts by weight of the curable precursor of a pressure sensitive adhesive. In some other exemplary aspects, this amount is typically of at least 1 part by weight, or at least 3 parts by weight of the curable precursor of a pressure sensitive adhesive.

Accordingly, in some exemplary aspects, the filler material is present in amounts in a range of from 1 to 20 parts, from 3 to 15 parts by weight, or even from 5 to 13 parts by weight of the curable precursor of a pressure sensitive adhesive.

The curable precursor according to the present disclosure may further comprise a filler material, as an optional ingredient. Filler materials for use herein are preferably selected from the group consisting of filler particles, in particular expanded perlite, microspheres, expendable microspheres, glassbeads, glass microspheres, silica type fillers, hydrophobic silica type fillers, hydrophilic silica type fillers, hydrophobic fumed silica, hydrophilic fumed silica, fibres, electrically and/or thermally conducting particles, nanoparticles, in particular silica nanoparticles, and any combinations or mixtures thereof. According to a preferred aspect, the particulate filler material for use herein comprises hollow glass microspheres.

As will be apparent to those skilled in the art of formulating pressure sensitive adhesives, the curable precursor of a pressure sensitive adhesive may also contain one or more conventional, but optional additives. Preferred additives include tackifiers, plasticizers, dyes, and antioxidants. Such additives can be used if they do not affect the superior properties of the pressure sensitive adhesives.

If tackifiers are used, then up to about 50% by weight, preferably less than 30% by weight, and more preferably less than 5% by weight based on the dry weight of the total adhesive polymer would be suitable. The type and amount of tackifier may affect properties such as contactability, bonding range, bond strength, heat resistance and specific adhesion.

Suitable tackifying resins include, for example, terpene phenolics, rosins, rosin esters, esters of hydrogenated rosins, synthetic hydrocarbon resins and combinations thereof. Especially suitable tackifying resins include the commercially available tackifying resins: FORAL 85E (a glycerol ester of highly hydrogenated refined gum rosin) commercially available from Eastman, Middelburg, NL), FORAL 3085 (a glycerol ester of highly hydrogenated refined wood rosin) commercially available from Hercules Inc., Wilmington, DE; ESCOREZ 2520 and ESCOREZ 5615 (aliphatic/aromatic hydrocarbon resins) commercially available from ExxonMobil Corp., Houston, TX; and Regalite 7100 (a partially hydrogenated hydrocarbon resin) commercially available from Eastman, Kingsport, Tennessee.

The curable precursor of a pressure sensitive adhesive may contain a plasticizer, if desired. The plasticizer is typically selected to be compatible with (i.e., miscible with) the other components in the composition such as the polymerizable material and any optional tackifier. Suitable plasticizers include, but are not limited to, various polyalkylene oxides (e.g., polyethylene oxides or propylene oxides), adipic acid esters, formic acid esters, phosphoric acid esters, benzoic acid esters, phthalic acid esters, and sulfonamides, or naphthenic oils.

The curable precursor of a pressure sensitive adhesive according to the present disclosure may further include a variety of additional additives depending on the envisaged properties for the resulting cured pressure sensitive adhesive. Exemplary additional additives include, but are not limited to, one or more plasticizers, UV stabilizers, antistatic agents, colorants, antioxidants, fungicides, bactericides, organic and/or inorganic filler particles, pigments, and any combinations thereof. Advantageously, the additional additives for use herein are non-polymerizable additives. As will be apparent to those skilled in the art, additional additives for use herein may be included at appropriate timing and in the appropriate polymeric or pre-polymeric matrix.

According to a preferred aspect of the present disclosure, the curable precursor of a pressure sensitive adhesive further comprises additives selected from the group consisting of actinic radiation-absorbing components, in particular colorants, dyes or pigments, preferably pigments, in particular carbon black and carbon black pigment mixtures.

When UV-absorbing pigments are used, in particular a UV-absorbing black pigment, suitable amounts are typically comprised between 0.01 and 3.0 pphw, between 0.02 and 2.0 pphw, between 0.05 and 1.5 pphw, between 0.06 and 1.0 pphw, between 0.07 and 1.0 pphw, or between 0.08 and 0.8 pphw, by weight of the free-radically polymerizable monomers. Other suitable amounts of UV-absorbing pigments, in particular a UV-absorbing black pigment, are typically comprised between 0.05 and 3.0 pphw, between 0.1 and 2.0 pphw, between 0.2 and 1.5 pphw, between 0.3 and 1.0 pphw, between 0.4 and 1.0 pphw, or between 0.4 and 0.8 pphw, by weight of the free-radically polymerizable monomers.

According to a particular aspect of the present disclosure, the curable precursor further comprises a UV-absorbing pigment, in particular a UV-absorbing black pigment, in an amount below 3 pphw, below 2 pphw, below 1.5 pphw, below 1.0 pphw, or even below 0.8 pphw, by weight of the free-radically polymerizable monomers.

According to another particular aspect of the present disclosure, the curable precursor further comprises a UV-absorbing pigment, in particular a UV-absorbing black pigment, in an amount above 0.05 pphw, above 0.1 pphw, above 0.2. pphw, above 0.4 pphw, or even above 0.5 pphw, by weight of the free-radically polymerizable monomers.

One exemplary method of preparing a curable precursor of a pressure sensitive adhesive comprises partially polymerizing monomers (using a suitable photoinitiator) to produce a polymer precursor composition comprising the (co)polymer and unpolymerized monomers, in particular (meth)acrylate (co)polymers and unpolymerized (meth)acrylate monomers. Generally, the polymerization initiator system of the present disclosure, and optionally, the filler material and the pigment, are added to the partially polymerized composition, then coated on a suitable substrate and further polymerized. The polymer composition is (pre)polymerized to a useful coating viscosity, which may be coated onto a substrate (such as a tape backing) and further polymerized. Partial polymerization provides a coatable solution of the (co)polymer, in particular the (meth)acrylate polymer.

The polymerizations may be conducted in the presence of, or preferably in the absence of, suitable solvents such as ethyl acetate, toluene and tetrahydrofuran which are unreactive with the functional groups of the components of the polymer composition.

Polymerization is accomplished by exposing the polymer precursor composition to energy in the presence of a photoinitiator. Accordingly, the method of preparation of the coatable polymer precursor composition is photoinitiated free radical polymerization.

Advantages of the photopolymerization method are that 1) heating the monomer solution is unnecessary and 2) photoinitiation is stopped completely when the activating light source is turned off. Polymerization to achieve a coatable viscosity may be conducted such that the conversion of monomers to polymer is preferably between 5 and 10%. Polymerization can be terminated when the desired conversion and viscosity have been achieved by removing the light source and by bubbling air (oxygen) into the solution to quench propagating free radicals. The solute polymer(s) may be prepared conventionally in a non-monomeric solvent and advanced to high conversion (degree of polymerization). When solvent (monomeric or non-monomeric) is used, the solvent may be removed (for example by vacuum distillation) either before or after formation of the polymer composition. While an acceptable method, this procedure involving a highly converted functional polymer is not preferred because an additional solvent removal step is required, another material may be required (the non-monomeric solvent), and dissolution of the high molecular weight, highly converted solute polymer in the monomer mixture may require a significant period of time.

Useful photoinitiators are as indicated above, and include benzoin ethers such as benzoin methyl ether and benzoin isopropyl ether; substituted acetophenones such as 2, 2-dimethoxyacetophenone, available as Irgacure™ 651 photoinitiator (Ciba- Geigy Corp.; Ardsley, NY), 2,2 dimethoxy-2-phenyl-1-phenylethanone, available as Esacure™ KB-1 photoinitiator (Sartomer Co.; West Chester, PA), and dimethoxyhydroxyacetophenone; substituted α-ketols such as 2- methyl-2-hydroxy propiophenone; aromatic sulfonyl chlorides such as 2-naphthalene-sulfonyl chloride; and photoactive oximes such as 1-phenyl-1,2-propanedione-2-(O-ethoxy-carbonyl)oxime. Particularly preferred among these are the substituted acetophenones.

Preferred photoinitiators are photoactive compounds that undergo a Norrish I cleavage to generate free radicals that can initiate by addition to the corresponding double bonds. The photoinitiator can be added to the mixture to be coated after the copolymer has been formed, i.e., photoinitiator can be added to the polymer mixture composition. Such polymerizable photoinitiators are described, for example, in U.S. Patent Nos. 5,902,836 and 5,506,279 (Gaddam et al.).

The polymer composition and the photoinitiator may be irradiated with activating UV radiation to polymerize the monomer component(s). UV light sources can be of two types: 1) relatively low light intensity sources such as Blacklights which provide generally 10 mW/cm² or less (as measured in accordance with procedures approved by the United States National Institute of Standards and Technology as, for example, with a UVIMAP™ UM 365 L-S radiometer manufactured by Electronic Instrumentation & Technology, Inc., in Sterling, VA) over a wavelength range of 280 to 400 nanometers and 2) relatively high light intensity sources such as medium pressure mercury lamps which provide intensities generally greater than 10 mW/cm², preferably between 15 and 450 mW/cm². Where actinic radiation is used to fully or partially polymerize the polymer composition, high intensities and short exposure times are preferred. For example, an intensity of 600 mW/cm² and an exposure time of about 1 second may be used successfully. Intensities can range from about 0.1 to about 150 mW/cm², preferably from about 0.5 to about 100 mW/cm², and more preferably from about 0.5 to about 50 mW/cm².

The degree of conversion can be monitored during the irradiation by measuring the index of refraction of the polymerizing medium. Useful coating viscosities are achieved with conversions (i.e. the percentage of available monomer polymerized) in the range of up to 30%, preferably 2-20%, more preferably from 5-15%, and most preferably from 7-12%. The molecular weight (weight average) of the solute polymer(s) is at least 100,000, preferably at least 500,000.

When preparing pressure sensitive adhesives, it is expedient for the photoinitiated polymerization reactions to proceed to virtual completion, i.e., depletion of the monomeric components, at temperatures less than about 70°C (preferably at 50°C or less) with reaction times less than 24 hours, preferably less than 12 hours, and more preferably less than 6 hours. These temperature ranges and reaction rates obviate the need for free radical polymerization inhibitors, which are often added to acrylic systems to stabilize against undesired, premature polymerization and gelation. Furthermore, the addition of inhibitors adds extraneous material that will remain with the system and inhibit the desired polymerization of the polymer composition and formation of the cured pressure sensitive adhesives of the disclosure. Free radical polymerization inhibitors are often required at processing temperatures of 70°C and higher for reaction periods of more than about 6 to 10 hours.

It is preferable to coat the curable precursor of a pressure sensitive adhesive soon after preparation. Generally, the polymerization initiator system according to the present disclosure (i.e. comprising a thermal redox initiator system and a photoinitiator, as described above), the filler material and the pigment, are added to the partially polymerized polymer precursor composition or to a solution of the (co)polymer, then coated on a suitable substrate and further polymerized. The curable precursor composition of pressure sensitive adhesive, either as a polymer composition or solution are easily coated upon suitable substrates, such as flexible backing materials, by conventional coating techniques, then further polymerized, and cured or dried, to produce adhesive coated sheet materials.

According to the present disclosure, the thermal redox initiator system has an activation temperature above which it is capable of producing free radicals upon heating and thermally initiate polymerization of the free-radically polymerizable material, and the curable precursor of the present disclosure comprises a photoinitiator preferably in an amount effective for the photoinitiator, upon actinic irradiation, to initiate polymerization of the free-radically polymerizable material and increase the temperature of the curable precursor above the activation temperature of the thermal redox initiator system.

Accordingly, the curable precursor of the present disclosure provides the ability to perform full curing of the curable precursor by short initiation with suitable triggering actinic radiation energy (e.g. UV light) without the necessity to provide an additional source of triggering energy (such as external thermal energy) until the curing is completed. Indeed, the actinic radiation-induced polymerization is exothermic, so that the temperature of the curable precursor is increased above the activation temperature of the thermal redox initiator system. The polymerization is then self-sustained and continued up to completion under the influence of the thermal redox initiator system. The thermal redox initiator system of the present disclosure advantageously completements and supports the actinic radiation-induced polymerization of the free-radically polymerizable material.

Adhesive articles may be prepared by coating the curable precursor composition of a pressure sensitive adhesive on a suitable support, such as a flexible backing. The flexible backing material for use herein may be any material conventionally utilized as a tape backing, optical film or any other flexible material.

Examples of materials that can be included in the flexible backing include polyolefins such as polyethylene, polypropylene (including isotactic polypropylene), polystyrene, polyester, polyvinyl alcohol, poly(ethylene terephthalate), poly(butylene terephthalate), poly(caprolactam), poly(vinylidene fluoride), polylactides, cellulose acetate, and ethyl cellulose and the like. Commercially available backing materials useful in the invention include kraft paper (available from Monadnock Paper, Inc.); cellophane (available from Flexel Corp.); spun-bond poly(ethylene) and poly(propylene), such as Tyvek™ and Typar™ (available from DuPont, Inc.); and porous films obtained from poly(ethylene) and poly(propylene), such as Teslin™ (available from PPG Industries, Inc.), and Cellguard™ (available from Hoechst-Celanese).

Backings may also be prepared of fabric such as woven fabric formed of threads of synthetic or natural materials such as cotton, nylon, rayon, glass, ceramic materials, and the like or nonwoven fabric such as air laid webs of natural or synthetic fibers or blends of these. The backing may also be formed of metal, metalized polymer films, or ceramic sheet materials may take the form of any article conventionally known to be utilized with pressure sensitive adhesive compositions such as labels, tapes, signs, covers, marking indicia, and the like.

The above-described precursor compositions are coated on a substrate using conventional coating techniques modified as appropriate to the particular substrate. For example, these compositions can be applied to a variety of solid substrates by methods such as roller coating, flow coating, dip coating, spin coating, spray coating, knife coating, and die coating. These various methods of coating allow the compositions to be placed on the substrate at variable thicknesses thus allowing a wider range of use of the compositions. Coating thicknesses may vary as previously described.

The polymers of the polymer compositions may be of any desirable concentration for subsequent coating, but is typically between 2 to 20 wt.% polymer solids in monomer, preferably 5 to 15 wt.%. The desired concentration may be achieved by further dilution of the coating composition, or by partial drying.

The flexible support may also comprise a release-coated substrate. Such substrates are typically employed when an adhesive transfer tape is provided. Examples of release-coated substrates are well known in the art and include, by way of example, silicone-coated kraft paper and the like. Tapes of the invention may also incorporate a low adhesion backing (LAB), which are known in the art.

According to another aspect, the present disclosure relates to a cured pressure sensitive adhesive obtainable by curing the curable precursor as above-described. In this context, the curing step is preferably performed by subjecting the curable precursor to a triggering energy selected from the group of thermal energy or actinic radiation, more preferably UV radiation.

In a preferred aspect of the cured pressure sensitive adhesive according to the disclosure, the curing step is performed by subjecting the curable precursor to a triggering energy which is exclusively selected from the group of actinic radiations, preferably UV radiation.

In still another advantageous aspect of the present disclosure, the curing step is performed by subjecting the curable precursor to a triggering energy which does not comprise any external thermal energy, provided by any external source of thermal energy.

According to another advantageous aspect, the cured pressure sensitive adhesive composition according to the present disclosure has a peel strength value of more than 10 N/cm, more than 15 N/cm, more than 20 N/cm, or even more than 25 N/cm, when measured at room temperature according to the 90°-Peel test method described in the experimental section.

According to still another advantageous aspect, the cured pressure sensitive adhesive composition according to the present disclosure has a peel strength value of more than 15 N/cm, more than 20 N/cm, more than 25 N/cm, more than 30 N/cm, more than 35 N/cm, more than 40 N/cm, more than 45 N/cm or even more than 50 N/cm, when measured at room temperature according to the T-Peel test method described in the experimental section.

According to still another advantageous aspect, the cured pressure sensitive adhesive composition according to the present disclosure has a static shear strength value of more than 1000 min, more than 3000 min, more than 5000 min, more than 8000 min, or even more than 10000 min, when measured at room temperature according to the static shear test method described in the experimental section.

According to still another advantageous aspect, the cured pressure sensitive adhesive composition according to the present disclosure has a static shear strength value of more than 1000 min, more than 3000 min, more than 5000 min, more than 8000 min, or even more than 10000 min, when measured at 70°C according to the static shear test method described in the experimental section.

According to yet another advantageous aspect, the cured pressure sensitive adhesive composition according to the present disclosure has a residual monomer content of less than 30 wt%, less than 20 wt%, less than 10 wt%, less than 5 wt%, less than 2 wt%, less than less than 1.5 wt%, less than 1.0 wt%, less than 0.8 wt%, less than 0.6 wt%, or even less than 0.4 wt%, when measured according to the test method described in the experimental section.

According to still another advantageous aspect, the cured pressure sensitive adhesive composition according to the present disclosure is in the form of a layer having a thickness of at least 500 µm, at least 800 µm, at least 1000 µm, at least 1500 µm, at least 2000 µm, at least 3000 µm, at least 4000 µm, or even at least 4500 µm, when measured according to the test method described in the experimental section.

In a particular aspect, the cured pressure sensitive adhesive composition according to the present disclosure takes the form of a polymeric foam layer. In the context of the present disclosure, the term "polymeric foam" is meant to designate a material based on a polymer and which material comprises voids, typically in an amount of at least 5% by volume, typically from 10% to 55% by volume or from 10% to 45% by volume. The voids may be obtained by any of the known methods such as cells formed by gas. Alternatively, the voids may result from the incorporation of hollow fillers, such as hollow polymeric particles, hollow glass microspheres or hollow ceramic microspheres.

A polymeric foam layer for use herein has for example a thickness comprised between 100 and 6000 µm, between 200 and 4000 µm, between 500 and 2000 µm, or even between 800 and 1500 µm. As will be apparent to those skilled in the art, in the light of the present description, the preferred thickness of the polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

In still another aspect of the present disclosure, it is provided a composite assembly comprising a substrate and a curable precursor of a pressure sensitive adhesive composition, as above-described, applied onto at least part of the surface of the substrate, thereby forming a layer of a curable precursor of a pressure sensitive adhesive. Advantageously, the composite assembly according to the present diclosure is an adhesive article, wherein the substrate is preferably a flexible backing layer.

According to an advantageous aspect of the composite assembly, the layer of a curable precursor of a pressure sensitive adhesive takes the form of a polymeric foam layer. According to this beneficial aspect, properties/requirements of the overall composite assembly such as application issues, deforming issues and energy distribution may be advantageously addressed by appropriate formulation of this polymeric foam layer, while other properties such as adhesion (quick adhesion) can be adjusted by the formulation of other non-foam pressure sensitive adhesive layers (also commonly referred to as skin layers).

According to still another aspect, it is provided a polymerization initiator system (suitable for polymerizing a curable precursor of a pressure sensitive adhesive composition) comprising:
a) a thermal redox initiator system, consisting of:
   i. a thermal polymerization initiator comprising an organic peroxide; and
   ii. an accelerator selected from the group consisting of tertiary amines, metal salts, mercaptans, and any combinations or mixtures thereof; and
b) a photoinitiator; and
wherein the thermal redox initiator system has an activation temperature above which it is capable of producing free radicals upon heating and thermally initiate polymerization of the free-radically polymerizable material, and wherein the curable precursor comprises a photoinitiator in an amount effective for the photoinitiator, upon actinic irradiation, to initiate polymerization of the free-radically polymerizable material and increase the temperature of the curable precursor above the activation temperature of the thermal redox initiator system.

According to yet another aspect, the present disclosure is directed to a method of applying a pressure sensitive adhesive composition to a substrate, comprising the steps of:
a) providing a curable precursor of a pressure sensitive adhesive composition as described above;
b) applying the curable precursor to at least part of the surface of the substrate, preferably by coating; and
c) curing the curable precursor, thereby forming a pressure sensitive adhesive composition.

According to another aspect, the present disclosure is directed to a method of manufacturing a pressure sensitive adhesive composition, comprising the steps of:
a) providing a curable precursor of a pressure sensitive adhesive composition as described above; and
b) curing the curable precursor, thereby forming a pressure sensitive adhesive composition.

According to sill another aspect, the present disclosure is directed to a method of curing a precursor a pressure sensitive adhesive composition, comprising the steps of:
a) providing a curable precursor of a pressure sensitive adhesive composition as described above; and
b) curing the curable precursor, thereby forming a cured pressure sensitive adhesive composition

In a preferred aspect of the methods as described above, the curing step is performed by subjecting the curable precursor to a triggering energy selected from the group of thermal energy or actinic radiation, more preferably UV radiation.

In a more preferred aspect of the methods as described above, the curing step is performed by subjecting the curable precursor to a triggering energy which is exclusively selected from the group of actinic radiations, preferably UV radiation. More preferably, the curing step is performed by subjecting the curable precursor to a triggering energy which does not comprise external thermal energy. Even more preferably, the curing step does not comprise any step of applying external thermal energy.

According to another advantageous aspect of the methods as described above, the curing step comprises the step of exposing the curable precursor to actinic radiation, more preferably UV radiation, in an amount sufficient for the photoinitiator to initiate polymerization of the free-radically polymerizable material and increase the temperature of the curable precursor above the activation temperature of the thermal redox initiator system, so that the thermal redox initiator system is capable of producing free radicals and further initiates polymerization of the free-radically polymerizable material.

As will be apparent to those skilled in the art, UV light sources (such as e.g. UV lamps) that might be used to trigger UV light-induced polymerization may generate thermal energy. However, and according to an advantageous aspect of the present disclosure, the intrinsic heat generated by the actinic radiation-induced polymerization alone is able to increase the temperature of the curable precursor above the activation temperature of the thermal redox initiator system, thereby producing free radicals and further initiating polymerization of the free-radically polymerizable material, without using the thermal energy generated by the UV light sources.

In still another aspect, the present invention relates to the use of a polymerization initiator system as described above, for curing a precursor of a pressure sensitive adhesive composition.

In yet another aspect, the present invention relates to the use of a curable precursor of a pressure sensitive adhesive or a cured pressure sensitive adhesive as described above, for industrial applications, in particular for construction applications and automotive applications, in particular for taped seal on body and weather-strip tape applications for the automotive industry.

The curable precursor of a pressure sensitive adhesive or a cured pressure sensitive adhesive of the present disclosure may be used in any article conventionally known to use such assemblies such as labels, tapes, signs, covers, marking indices, display components, touch panels, and the like. Flexible backing materials having microreplicated surfaces are also contemplated.

The substrate to which the curable precursor of a pressure sensitive adhesive or a cured pressure sensitive adhesive may be applied is selected depending on the particular application. For example, the curable precursor of a pressure sensitive adhesive or a cured pressure sensitive adhesive may be applied to sheeting products (e.g., decorative graphics and reflective products), label stock, and tape backings. Additionally, the curable precursor of a pressure sensitive adhesive or a cured pressure sensitive adhesive may be applied directly onto other substrates such as a metal panel (e.g., automotive panel) or a glass window so that yet another substrate or object can be attached to the panel or window. Accordingly, the curable precursor of a pressure sensitive adhesive or a cured pressure sensitive adhesive of the present disclosure may find a particular use in the automotive manufacturing industry (e.g. for attachment of exterior trim parts or for weatherstrips), in the aerospace manufacturing industry, in the construction industry, in the solar panel construction industry, in sound management applications or in sealing applications.

The following items merely serve to illustrate the technical content of the present disclosure. The subject-matter of the invention is defined in claims 1-15 attached.
Item 1 is a curable precursor of a pressure sensitive adhesive composition comprising:
   (1) a free-radically polymerizable material comprising at least one free-radically polymerizable monomer;
   (2) a polymerization initiator system, comprising:
      a) a thermal redox initiator system, consisting of:
         i. a thermal polymerization initiator comprising an organic peroxide; and
         ii. an accelerator selected from the group consisting of tertiary amines, metal salts, mercaptans, and any combinations or mixtures thereof; and
      b) a photoinitiator.
Item 2 is a curable precursor according to item 1, wherein the at least one free-radically polymerizable monomer comprises ethylenically unsaturated monomer(s).
Item 3 is a curable precursor according to item 1 or 2, wherein the free-radically polymerizable monomer is selected from the group consisting of (meth)acrylate esters, (meth)acrylate monoesters of polyhydroxy alkyl alcohols, multifunctional (meth)acrylate esters, macromeric (meth)acrylates, (meth)acrylic acids and their salts, nitrogen-bearing monomers, dibasic acid monomers, vinyl esters, styrenes and ring-substituted styrenes, vinyl halides and vinylidene halides, vinyl ethers, and any combinations or mixtures thereof.
Item 4 is a curable precursor according to any of the preceding items, wherein the free-radically polymerizable monomer is selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, (meth)acrylate esters of 2-alkyl alkanols wherein the molar carbon number average of the 2-alkyl alkanols is 12 to 32, and any combinations or mixtures thereof.
Item 5 is a curable precursor according to item 4, wherein the free-radically polymerizable monomer is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof.
Item 6 is a curable precursor according to any of item 4 or 5, wherein the free-radically polymerizable monomer is selected from the group consisting of iso-octyl acrylate, 2-ethylhexyl acrylate, 2-octyl acrylate, 2-propylheptyl acrylate, and any mixtures thereof.
Item 7 is a curable precursor according to any of items 4 to 6, wherein the free-radically polymerizable monomer comprises 2-ethylhexyl acrylate.
Item 8 is a curable precursor according to any of the preceding items, wherein the organic peroxide is selected from the group consisting of diacyl peroxides, dialkyl peroxides, hydroperoxides, ketone peroxides, and any mixtures thereof.
Item 9 is a curable precursor according to any of the preceding items, wherein the organic peroxide is selected from the group of diacyl peroxides, preferably benzoyl peroxide.
Item 10 is a curable precursor according to any of the preceding items, wherein the accelerator is selected from the group of tertiary amines, in particular those selected from the group consisting of tertiary aromatic amines.
Item 11 is a curable precursor according to item 10, wherein the accelerator is selected from the group of tertiary aromatic amines having the following Formula: 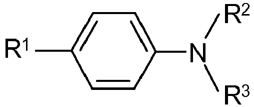 wherein
   R¹ is an H or C₁-C₄ alkyl group, preferably methyl,
   R² is an H, C₁-C₄ alkyl group, or a heteroalkyl, and
   R³ is identical or distinct from R², and is an H, C₁-C₄ alkyl group, or an heteroalkyl.
Item 12 is a curable precursor according to item 11, wherein R¹ = R² = R³ = methyl.
Item 13 is a curable precursor according to item 11, wherein R¹ = H and R² = R³ = methyl.
Item 14 is a curable precursor according to item 11, wherein R¹ = methyl, and R² = R³ = -CH₂-CH₂OH.
Item 15 is a curable precursor according to any of the preceding items, wherein the photoinitiator is selected from the group of type (I) photoinitiators (α-cleavage agents), in particular those selected from the group consisting of dialkoxyacetophenones, 2-phenylacetophenones, 2,2-dialkoxy-2-phenylacetophenones.
Item 16 is a curable precursor according to item 15, wherein the photoinitiator is selected from the group of 2,2-dialkoxy-2-phenylacetophenones, in particular 2,2-methoxy-2-phenylacetophenone.
Item 17 is a curable precursor according to any of the preceding items, wherein the thermal redox initiator system has an activation temperature above which it is capable of producing free radicals upon heating and thermally initiate polymerization of the free-radically polymerizable material, and wherein the curable precursor comprises a photoinitiator in an amount effective for the photoinitiator, upon actinic irradiation, to initiate polymerization of the free-radically polymerizable material and increase the temperature of the curable precursor above the activation temperature of the thermal redox initiator system.
Item 18 is a curable precursor according to item 17, wherein the activation temperature of the thermal redox initiator system is below 100°C, below 90°C, below 80°C, below 60°C, below 50°C, below 40°C, or even below 30°C.
Item 19 is a curable precursor according to any of item 17 or 18, wherein the activation temperature of the thermal redox initiator system is comprised between 20 and 100°C, between 25 and 90°C, between 30 and 80°C, between 30 and 70°C, between 30 and 60°C, or even between 40 and 60°C.
Item 20 is a curable precursor according to any of the preceding items, which comprises a thermal redox initiator system in an amount comprised between 0.01 and 1.5 pphw, between 0.02 and 1.0 pphw, between 0.03 and 0.5 pphw, between 0.04 and 0.2 pphw, or even between 0.05 and 0.1 pphw, by weight of the free-radically polymerizable monomers.
Item 21 is a curable precursor according to any of the preceding items, wherein the ratio thermal polymerization initiator : accelerator is comprised between 5:1 and 1:1, between 4:1 and 1:1, between 3:1 and 1:1, between 2.5:1 and 1.5:1, or even of about 2:1.
Item 22 is a curable precursor according to any of the preceding items, which comprises a thermal polymerization initiator in an amount comprised between 0.01 and 1.0 pphw, between 0.02 and 0.8 pphw, between 0.03 and 0.6 pphw, between 0.04 and 0.2 pphw, between 0.04 and 0.1 pphw, or between 0.04 and 0.08 pphw, by weight of the free-radically polymerizable monomers.
Item 23 is a curable precursor according to any of the preceding items, which comprises an accelerator in an amount comprised between 0.005 and 1.0 pphw, between 0.005 and 0.8 pphw, between 0.01 and 0.6 pphw, between 0.01 and 0.4 pphw, between 0.01 and 0.2 pphw, between 0.01 and 0.05 pphw, or even between 0.01 and 0.1 pphw, by weight of the free-radically polymerizable monomers.
Item 24 is a curable precursor according to any of the preceding items, which comprises a photoinitiator in an amount comprised between 0.01 and 2.0 pphw, between 0.05 and 1.5 pphw, between 0.05 and 1.0 pphw, between 0.1 and 0.8 pphw, or between 0.1 and 0.5 pphw, by weight of the free-radically polymerizable monomers.
Item 25 is a curable precursor according to any of the preceding items, wherein the ratio photoinitiator : thermal redox initiator system is comprised between 5:1 and 1:5, between 4:1 and 1:4, between 4:1 and 1:2, between 4:1 and 1:1, or even between 4:1 and 2:1.
Item 26 is a curable precursor according to any of the preceding items, wherein the free-radically polymerizable material further comprises a co-monomer having an ethylenically unsaturated group, which is preferably a polar co-monomer, more preferably a polar acrylate, even more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof.
Item 27 is a curable precursor according to any of the preceding items, which further comprises a filler material which is preferably selected from the group consisting of filler particles, in particular expanded perlite, microspheres, expendable microspheres, glassbeads, glass microspheres, silica type fillers, hydrophobic silica type fillers, hydrophilic silica type fillers, hydrophobic fumed silica, hydrophilic fumed silica, fibres, electrically and/or thermally conducting particles, nanoparticles, in particular silica nanoparticles, and any combinations or mixtures thereof.
Item 28 is a curable precursor according to item 27, wherein the particulate filler material comprises hollow glass microspheres.
Item 29 is a curable precursor according to any of the preceding items, which further comprises additives selected from the group consisting of actinic radiation-absorbing components, in particular colorants, dyes or pigments, preferably pigments, in particular carbon black and carbon black pigment mixtures.
Item 30 is a curable precursor according to any of the preceding items, which further comprises an actinic radiation-absorbing pigment, in particular a UV-absorbing pigment, in particular a UV-absorbing black pigment, in an amount comprised between 0.01 and 3.0 pphw, between 0.02 and 2.0 pphw, between 0.05 and 1.5 pphw, between 0.06 and 1.0 pphw, between 0.07 and 1.0 pphw, or between 0.08 and 0.8 pphw, by weight of the free-radically polymerizable monomers.
Item 31 is a curable precursor according to any of the preceding items, which further comprises an actinic radiation-absorbing pigment, in particular a UV-absorbing pigment, in particular a UV-absorbing black pigment, in an amount below 3 pphw, below 2 pphw, below 1.5 pphw, below 1.0 pphw, or even below 0.8 pphw, by weight of the free-radically polymerizable monomers.
Item 32 is a curable precursor according to any of the preceding items, which further comprises an actinic radiation-absorbing pigment, in particular a UV-absorbing pigment, in particular a UV-absorbing black pigment, in an amount above 0.05 pphw, above 0.1 pphw, above 0.2. pphw, above 0.4 pphw, or even above 0.5 pphw, by weight of the free-radically polymerizable monomers.
Item 33 is a curable precursor according to any of the preceding items, comprising:
   a) 100 parts by weight of a free-radically polymerizable material comprising at least one free-radically polymerizable monomer;
   b) a thermal redox initiator system in an amount comprised between 0.01 and 1.5 pphw, between 0.02 and 1.0 pphw, between 0.03 and 0.5 pphw, between 0.04 and 0.2 pphw, or even between 0.05 and 0.1 pphw, by weight of the free-radically polymerizable monomers.
   c) a photoinitiator in an amount comprised between 0.01 and 2.0 pphw, between 0.05 and 1.5 pphw, between 0.05 and 1.0 pphw, between 0.1 and 0.8 pphw, or between 0.1 and 0.5 pphw, by weight of the free-radically polymerizable monomers.
   d) optionally, a filler material in an amount comprised between 1 and 20 pphw, between 3 and 15 pphw, or even between 5 and 13 pphw, by weight of the free-radically polymerizable monomers, wherein the filler is preferably selected from the group of hollow glass microspheres fumed silica;
   e) optionally, an actinic radiation-absorbing pigment, in particular a UV-absorbing black pigment, in an amount preferably comprised between 0.01 and 3.0 pphw, between 0.02 and 2.0 pphw, between 0.05 and 1.5 pphw, between 0.06 and 1.0 pphw, between 0.07 and 1.0 pphw, or between 0.08 and 0.8 pphw, by weight of the free-radically polymerizable monomers.
Item 34 is a curable precursor according to item 33, wherein the free-radically polymerizable material comprises:
   a) from 60 to 100 parts by weight, from 70 to 95 parts by weight, from 80 to 95 parts by weight or even from 85 to 95 parts by weight, of a free-radically polymerizable monomer, in particular a (meth)acrylate ester monomer(s); and
   b) optionally, from 0 to 40 parts by weight, from 5 to 30 parts by weight, from 5 to 20 parts by weight or even from 5 to 15 parts by weight, of a co-monomer having an ethylenically unsaturated group, in particular acrylic acid monomer(s).
Item 35 is a cured pressure sensitive adhesive composition obtained by curing the curable precursor according to any of the preceding items, wherein the curing step is preferably performed by subjecting the curable precursor to a triggering energy selected from the group of thermal energy or actinic radiation, more preferably UV radiation.
Item 36 is a cured pressure sensitive adhesive composition obtained by curing the curable precursor according to any of the preceding items, wherein the curing step is performed by subjecting the curable precursor to a triggering energy which is exclusively selected from the group of actinic radiations, preferably UV radiation.
Item 37 is a cured pressure sensitive adhesive composition obtained by curing the curable precursor according to any of the preceding items, wherein the curing step is performed by subjecting the curable precursor to a triggering energy which does not comprise external thermal energy.
Item 38 is a cured pressure sensitive adhesive composition according to any of items 35 to 37, which has a peel strength value of more than 10 N/cm, more than 15 N/cm, more than 20 N/cm, or even more than 25 N/cm, when measured at room temperature according to the 90°-Peel test method described in the experimental section.
Item 39 is a cured pressure sensitive adhesive composition according to any of items 35 to 38, which has a peel strength value of more than 15 N/cm, more than 20 N/cm, more than 25 N/cm, more than 30 N/cm, more than 35 N/cm, more than 40 N/cm, more than 45 N/cm or even more than 50 N/cm, when measured at room temperature according to the T-Peel test method described in the experimental section.
Item 40 is a cured pressure sensitive adhesive composition according to any of items 35 to 39, which has a static shear strength value of more than 1000 min, more than 3000 min, more than 5000 min, more than 8000 min, or even more than 10000 min, when measured at room temperature according to the static shear test method described in the experimental section.
Item 41 is a cured pressure sensitive adhesive composition according to any of items 35 to 40, which has a static shear strength value of more than 1000 min, more than 3000 min, more than 5000 min, more than 8000 min, or even more than 10000 min, when measured at 70°C according to the static shear test method described in the experimental section.
Item 42 is a cured pressure sensitive adhesive composition according to any of items 35 to 41, which has a residual monomer content of less than 30 wt%, less than 20 wt%, less than 10 wt%, less than 5 wt%, less than 2 wt%, less than less than 1.5 wt%, less than 1.0 wt%, less than 0.8 wt%, less than 0.6 wt%, or even less than 0.4 wt%, when measured according to the test method described in the experimental section.
Item 43 is a cured pressure sensitive adhesive composition according to any of items 35 to 42, in the form of a layer having a thickness of at least 500 µm, at least 800 µm, at least 1000 µm, at least 1500 µm, at least 2000 µm, at least 3000 µm, at least 4000 µm, or even at least 4500 µm, when measured according to the test method described in the experimental section.
Item 44 is a cured pressure sensitive adhesive composition according to any of items 35 to 43, which takes the form of a polymeric foam layer.
Item 45 is a polymerization initiator system, comprising:
   a) a thermal redox initiator system, consisting of:
      i. a thermal polymerization initiator comprising an organic peroxide; and
      ii. an accelerator selected from the group consisting of tertiary amines, metal salts, mercaptans, and any combinations or mixtures thereof; and
   b) a photoinitiator.
Item 46 is a method of applying a pressure sensitive adhesive composition to a substrate, comprising the steps of:
   a) providing a curable precursor according to any of items 1 to 34;
   b) applying the curable precursor to at least part of the surface of the substrate, preferably by coating; and
   c) curing the curable precursor, thereby forming a pressure sensitive adhesive composition.
Item 47 is a method of manufacturing a pressure sensitive adhesive composition, comprising the steps of:
   a) providing a curable precursor according to any of items 1 to 34; and
   b) curing the curable precursor, thereby forming a pressure sensitive adhesive composition.
Item 48 is a method of curing a precursor a pressure sensitive adhesive composition, comprising the steps of:
   a) providing a curable precursor according to any of items 1 to 34; and
   b) curing the curable precursor, thereby forming a cured pressure sensitive adhesive composition.
Item 49 is a method according to any of items 46 to 48, wherein the curing step is preferably performed by subjecting the curable precursor to a triggering energy selected from the group of thermal energy or actinic radiation, more preferably UV radiation.
Item 50 is a method according to any of items 46 to 49, wherein the curing step is performed by subjecting the curable precursor to a triggering energy which is exclusively selected from the group of actinic radiations, preferably UV radiation.
Item 51 is a method according to any of items 46 to 50, wherein the curing step is performed by subjecting the curable precursor to a triggering energy which does not comprise external thermal energy.
Item 52 is a method according to any of items 46 to 51, wherein the curing step does not comprise any step of applying external thermal energy.
Item 53 is a method according to any of items 46 to 52, wherein the curing step comprises the step of exposing the curable precursor to actinic radiation, more preferably UV radiation, in an amount sufficient for the photoinitiator to initiate polymerization of the free-radically polymerizable material and increase the temperature of the curable precursor above the activation temperature of the thermal redox initiator system, so that the thermal redox initiator system is capable of producing free radicals and further initiates polymerization of the free-radically polymerizable material.
Item 54 is the use of a polymerization initiator system as described in any of items 1 to 34, for the manufacture of a pressure sensitive adhesive composition.
Item 55 is the use of a polymerization initiator system as described in any of items 1 to 34, for curing a precursor of a pressure sensitive adhesive composition.
Item 56 is the use of a curable precursor of a pressure sensitive adhesive composition according to any of items 1 to 34 or the cured pressure sensitive adhesive according to any of items 35 to 44, for industrial applications, in particular for construction applications and automotive applications, in particular for taped seal on body and weather-strip tape applications for the automotive industry.

### EXAMPLES

The invention is further illustrated by the following examples. These examples are merely for illustrative purposes only and are not meant to be limiting on the scope of the appended claims.

### Test Methods applied:

### 90°-Peel-test at 300 mm/min (according to Test Method, Finat No. 2):

Pressure sensitive adhesive composition stripes according to the present disclosure and having a width of 10 mm and a length > 175 mm are cut out in the machine direction from the sample material.

For test sample preparation, the liner is first removed from the one adhesive side and placed on an aluminum strip having the following dimension 22 x 1.6 cm. Then, the adhesive coated side of each PSA assembly strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive composition stripes to the test panel, the test samples are allowed to dwell 24 hours at ambient room temperature (23°C +/- 2°C, 50% relative humidity +/-5%) prior to testing.

For peel testing, the test samples are in a first step clamped in the lower movable jaw of a Zwick tensile tester (Model Z020 commercially available from Zwick/Roell GmbH, Ulm, Germany). The pressure sensitive adhesive film strips are folded back at an angle of 90° and their free ends grasped in the upper jaw of the tensile tester in a configuration commonly utilized for 90° peel measurements. The tensile tester is set at 300 mm per minute jaw separation rate. Test results are expressed in Newton per 10 mm (N/10 mm). The quoted peel values are the average of two 90°-peel measurements.

### T-Peel-test at 300 mm/min:

Pressure sensitive adhesive composition stripes according to the present disclosure and having a width of 10 mm and a length > 175 mm are cut out in the machine direction from the sample material.

For test sample preparation, the pressure sensitive adhesive specimen is placed between two aluminum stripes having the following dimension 22 x 1.6 cm. Next, the test samples are rolled four times in each direction with a standard FINAT test roller (weight 6.8 kg) at a speed of approximately 10 mm per second to obtain intimate contact between the pressure sensitive adhesive mass and the surface.

The test samples are allowed to dwell 24 hours at ambient room temperature (23°C +/-2°C, 50% relative humidity +/-5%) prior to testing.

For T-peel testing, the test samples are in a first step clamped in the lower movable jaw of a Zwick tensile tester (Model Z020 commercially available from Zwick/Roell GmbH, Ulm, Germany). The pressure sensitive adhesive film strips are folded back at an angle of 90° and their free ends grasped in the upper jaw of the tensile tester in a configuration commonly utilized for 90° peel measurements. The tensile tester is set at 300 mm per minute jaw separation rate. Test results are expressed in Newton per 10 mm (N/10 mm). The quoted peel values are the average of three T-peel measurements.

### Static shear test @ 70 °C or room temperature with 500 g hanging weights (according to Test Method, Finat No.8):

The static shear is a measure of the cohesiveness or internal strength of an adhesive. It is measured in units of time (minutes) required to pull a standard area of adhesive sheet material from a stainless steel test panel under stress of a constant, standard load.

A pressure sensitive adhesive film stripe of 13 mm width and 25 mm length is cut out in machine direction from the sample and the specimen placed on a clean steel test panel. The opposing side of the test sample is then placed on an aluminium plate having a hole for fixing the weight using light finger pressure. The standard FINAT test roller (weight 6.8 kg) is rolled twice in each direction at a speed of approximately 10 mm per second to obtain intimate contact between the pressure sensitive adhesive mass and the substrate surface (test plate). After applying the pressure sensitive adhesive film stripe (specimen) to the test plate, the test plate is allowed a dwell time at room temperature (23°C +/-2°C, 50% relative humidity +/-5%) for a period of 24 h before testing.

The test panel is placed in a shear holding device. After a 10 minute dwell time at the test temperature of 70°C or room temperature, the 500 g load is hung into the hole of the aluminum test panels. The timer is started. The results are recorded in minutes until failure and are the average of two shear measurements. A recorded time of "10000+" indicates that the tape does not fail after 10000 min, when the test is stopped.

### Test panels/substrates used for testing:

a) Stainless steel test panels according to EN1939:20, surface 1.4301 mirror-like (commercially available from Rocholl GmbH) having a dimension of 150 mm x 50 mm x 2 mm are the selected panels for all 90° peel tests.
   Prior to testing the stainless steel panels are cleaned according to the following described procedure. First, the stainless steel panels are wiped once with heptane, then with MEK followed by a last wipe with heptane and thereafter dried with a paper tissue.
b) Aluminum test panels in accordance with ASTM B211 having a dimension of 50 mm x 25 mm x 1 mm. Prior to the preparation of a test assembly, the aluminium panels are roughened using ScotchBrite 4774 (commercially available by 3M) and afterwards wiped once with isopropyl alcohol. Drying is done using a paper tissue.

### Thickness measurement

The thickness of the test samples is measured with sliding capiler equipment (commercially available from Heidenhain and using stamp diameter of 10 mm) at the front, middle and end of the specimen. The test results represent the average of these three values.

### Measurement of residual monomer content

Test samples having the dimension 4x4cm are cut out and placed in an oven (commercially available from Hereaus) at 120°C +/-2°C for 120 minutes +/-5 minutes. The specimens are weighted in a precision balance (commercially available from Sartorius) before and after heat treatment. The test results (weight loss) are expressed in wt% and represent the average of two measurements.

### Measurement of lightness/darkness

The L* values (lightness/darkness) of the test samples are determined using a Minolta C-2500d Spectrocolorimeter using a 10° reflectance, Illum=D65 and the CIE lab scale L*a*b, where L*=0 for black and L*=100 for white. Since a* and b* for black samples are usually between -5 and +5, they are not reported unless one of them is outside of that range. The test results are dimensionless and represent the average of two measurements.

### Raw materials:

In the examples, the following raw materials are used:
**2-Ethyl hexyl acrylate** (C8-acrylate, 2-EHA): is an ester of 2-ethylalcohol and acrylic acid which is obtained from BASF SE, Germany.
**Acrylic acid** (AA) is obtained from Arkema, Italy.
**Dibenzoyl peroxide** (DBPO) is a thermal polymerization initiator, commercially available from Sigma -Aldrich, Germany (DBPO).
**N,N-dimethyl-p-toluidine** (DMPT) is commercially available from Sigma-Aldrich, Germany.
**2,2'-(4-Methylphenylimino)diethanol** (MPDE) is commercially available from Sigma-Aldrich, Germany.
**1,6-Hexanedioldiacrylate** (HDDA) is a fast curing diacrylate obtained from BASF SE, Germany.
**Omnirad BDK** 2,2-dimethoxy-2-phenylacetophenone is a UV-initiator for radical polymerization, commercially available from iGm resins, Waalwijk Netherlands.
**3M Glass bubbles** (K15) are hollow glass bubbles with a diameter of 115 µm, available from 3M, Germany.
**Aerosil R-972** are hydrophobic fumed silica particles, available from Evonik, Germany.
**Pencolor 9B117** is a black coloring pigment (18wt% carbon black in phenoxyethyl acrylate), commercially available from Penn color, USA.
**Tape GTE 6212** is a dark acrylic foam tape, commercially available from 3M Germany.

### Preparation of the curable precursors of a PSA and comparative example C1:

The curable precursors CP1 to CP9 and comparative example C1 of the pressure sensitive adhesives are prepared by combining the C8 acrylate (2-EHA) and 0.04 pph of Omnirad BDK as a photoinitiator in a glass vessel. Before the UV exposure is initiated, the mixture is flushed 10 minutes with nitrogen and nitrogen is also bubbled into the mixture the whole time until the polymerization process is stopped by adding air to the polymer precursor. All the time, the mixture is stirred with a propeller stirrer (300 U/min) and the reaction is stopped when a viscosity around 4500 mPas is reached (when measured with a Brookfield viscosimeter, T = 25 °C, spindle 4, 12 rpm). Additionally, the remaining amount of 0.16 pph Omnirad BDK, 0.1 pph HDDA crosslinker, 6 pph glass bubbles K15, 3 pph Aerosil 972, the selected amount of coloring pigment Pencolor 9B117, and the selected amount of DBPO are added to the polymer precursor composition and homogenized using a mechanical stirrer for 15 minutes and degassed under vacuum for 15 more using a dessicator. Subsequently, the selected amount of DMPT or MPDE is added as a solution in 2-EHA immediately before coating.

The exact formulations of the curable precursors are later listed (in pph) in Table 2 below.

The curable precursors are coated and the resulting adhesive layer thickness is set to to about 2000 µm using the installed regulation capiler. Curing is effected in a two stage UV-curing station both from the top, i.e. in a direction towards the exposed curable precursor layer, and bottom side. The radiation is provided by fluorescent lamps at a wavelength between 300 - 400 nm with a maximum at 351 nm. The total radiation intensity irradiated cumulatively from top and bottom is listed in Table 1. The UV-radiation curing of the curable precursors is done both, from the top and bottom side, hereby the UV intensity is set at equal levels in all zones.

**Table 1**

| | Curing stage 1 | Curing stage 2 |
|---|---|---|
| Total intensity [mW/cm²] | 5.8 (3.1 top 2.7 bottom) | 8.0 (4 top 4 bottom) |
| Total time [minutes] | 0.24 | 0.12 |

### Formulations of the curable precursors used for making the pressure sensitive adhesives

The formulations of the curable precursors used for making the pressure sensitive adhesives are listed in Table 2 below. Table 2 contains comparative example 1, later referred to as C1, which is a curable precursor not comprising a thermal redox initiator system.

**Table 2**

| Curable precursor | Monomer | | Photoinitiator | Thermal redox initiator | | | Crosslinker | Filler | | Pigment |
|---|---|---|---|---|---|---|---|---|---|---|
| | 2-EHA | AA | BDK | DBPO | DMPT | MPDE | HDDA | GBK15 | A-972 | 9B-117 |
| | w% | w% | pph | pph | pph | pph | pph | pph | pph | pph |
| C1 | 90 | 10 | 0.20 | - | - | - | 0.1 | 6 | 3 | 0.6 |
| CP1 | 90 | 10 | 0.20 | 0.20 | 0.05 | - | 0.1 | 6 | 3 | 0.6 |
| CP2 | 90 | 10 | 0.20 | 0.20 | 0.10 | - | 0.1 | 6 | 3 | 0.6 |
| CP3 | 90 | 10 | 0.20 | 0.30 | 0.15 | - | 0.1 | 6 | 3 | 0.6 |
| CP4 | 90 | 10 | 0.20 | 0.05 | | 0.025 | 0.1 | 6 | 3 | 0.6 |
| CP5 | 90 | 10 | 0.20 | 0.20 | | 0.05 | 0.1 | 6 | 3 | 0.6 |
| CP6 | 90 | 10 | 0.20 | 0.20 | | 0.10 | 0.1 | 6 | 3 | 0.6 |
| CP7 | 90 | 10 | 0.20 | 0.30 | | 0.15 | 0.1 | 6 | 3 | 0.6 |
| CP8 | 90 | 10 | 0.20 | 0.45 | | 0.12 | 0.1 | 6 | 3 | 0.6 |
| CP9 | 90 | 10 | 0.20 | 0.05 | | 0.025 | 0.1 | 6 | 3 | 0.8 |

### Test Results:

### Residual monomer contents

The residual monomer content results of comparative example C1, as well as of the pressure sensitive adhesives made from curable precursors CP1- CP8 are shown in Table 3 below.

**Table 3**

| Curable precursor | Residual monomer content (wt%) |
|---|---|
| C1 | 32.02 |
| CP1 | 0.50 |
| CP2 | 0.62 |
| CP3 | 0.66 |
| CP4 | 0.69 |
| CP5 | 0.36 |
| CP6 | 0.42 |
| CP7 | 0.45 |
| CP8 | 0.39 |

### 90° Peel and T-Peel-test results at 300 mm/min

The peel results of comparative example C1, as well as of the pressure sensitive adhesives made from curable precursors CP1- CP9 are shown in Table 4 below.

**Table 4**

| Curable precursor | 90° Peel Test values (N/cm) | T-Peel Test values (N/cm) |
|---|---|---|
| C1 | 6.48 | 12.16 |
| CP1 | 26.27 | 49.38 |
| CP2 | 26.08 | 47.57 |
| CP3 | 26.40 | 46.87 |
| CP4 | 24.80 | 47.65 |
| CP5 | 27.69 | 51.14 |
| CP6 | 28.16 | 50.55 |
| CP7 | 26.00 | 52.43 |
| CP8 | 27.61 | 51.47 |
| CP9 | - | 40.87 |

### Static shear test results at room temperature and at 70°C

The static shear results of the pressure sensitive adhesives made from curable precursors CP4 and CP9 are shown in Table 5 below. In contrast, the static shear performance of comparative example C1 could not be measured, as the composition was incompletely cured.

**Table 5**

| Curable precursor | Static Shear Test values at RT (N/cm) | Static Shear Test values at 70°C (N/cm) |
|---|---|---|
| CP4 | > 10.000 | > 10.000 |
| CP9 | > 10.000 | > 10.000 |
| C1 | not measured | not measured |

### Lightness

Lightness is a critical parameter to characterize pigmented adhesives. Therefore lightness of comparative and commercially available dark acrylic foam tape GTE 6212, as well as of the pressure sensitive adhesives made from curable precursors CP4 and CP9 are measured with respect to the L* value, wherein L*=100 corresponds to maximum bright and L*=0 corresponds to maximum dark. Results are shown in Table 6 below.

**Table 6**

| Curable precursor | L* value | Pigment level (pph) |
|---|---|---|
| GTE 6212 | 44.74 | 0.4 |
| CP4 | 37.17 | 0.6 |
| CP9 | 34.47 | 0.8 |

Compared to commercially available dark acrylic foam tapes such as e.g. GTE 6212, the pressure sensitive adhesive compositions according to the present disclosure are provided with increased darkness, as evidenced by a strong reduction of the L* value.

## Claims

1. A curable precursor of a pressure sensitive adhesive composition comprising:
(1) a free-radically polymerizable material comprising at least one free-radically polymerizable monomer;
(2) a polymerization initiator system, comprising:
a) a thermal redox initiator system, consisting of:
i. a thermal polymerization initiator comprising an organic peroxide; and
ii. an accelerator selected from the group consisting of tertiary amines, metal salts, mercaptans, and any combinations or mixtures thereof; and
b) a photoinitiator; and
wherein the thermal redox initiator system has an activation temperature above which it is capable of producing free radicals upon heating and thermally initiate polymerization of the free-radically polymerizable material, and wherein the curable precursor comprises a photoinitiator in an amount effective for the photoinitiator, upon actinic irradiation, to initiate polymerization of the free-radically polymerizable material and increase the temperature of the curable precursor above the activation temperature of the thermal redox initiator system.

2. A curable precursor according to claim 1, wherein the at least one free-radically polymerizable monomer comprises ethylenically unsaturated monomer(s).

3. A curable precursor according to claim 1 or 2, wherein the free-radically polymerizable monomer is selected from the group consisting of (meth)acrylate esters, (meth)acrylate monoesters of polyhydroxy alkyl alcohols, multifunctional (meth)acrylate esters, macromeric (meth)acrylates, (meth)acrylic acids and their salts, nitrogen-bearing monomers, dibasic acid monomers, vinyl esters, styrenes and ring-substituted styrenes, vinyl halides and vinylidene halides, vinyl ethers, and any combinations or mixtures thereof.

4. A curable precursor according to any of the preceding claims, wherein the free-radically polymerizable monomer is selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, (meth)acrylate esters of 2-alkyl alkanols wherein the molar carbon number average of the 2-alkyl alkanols is 12 to 32, and any combinations or mixtures thereof.

5. A curable precursor according to any of the preceding claims, wherein the organic peroxide is selected from the group consisting of diacyl peroxides, dialkyl peroxides, hydroperoxides, ketone peroxides, and any mixtures thereof.

6. A curable precursor according to any of the preceding claims, wherein the accelerator is selected from the group of tertiary amines, in particular those selected from the group consisting of tertiary aromatic amines.

7. A curable precursor according to claim 6, wherein the accelerator is selected from the group of tertiary aromatic amines having the following formula: 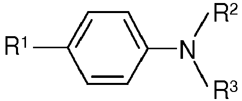 wherein
R¹ is an H or C₁-C₄ alkyl group,
R² is an H, C₁-C₄ alkyl group, or a heteroalkyl, and
R³ is identical or distinct from R², and is an H, C₁-C₄ alkyl group, or a heteroalkyl.

8. A curable precursor according to any of the preceding claims, wherein the photoinitiator is selected from the group of type (I) photoinitiators (α-cleavage agents).

9. A curable precursor according to any of the preceding claims, wherein the photoinitiator is selected from the group consisting of dialkoxyacetophenones, 2-phenylacetophenones, 2,2-dialkoxy-2-phenylacetophenones.

10. A curable precursor according to any of the preceding claims, wherein the activation temperature of the thermal redox initiator system is below 100°C, below 90°C, below 80°C, below 60°C, below 50°C, below 40°C, or even below 30°C.

11. A curable precursor according to any of the preceding claims, which further comprises an actinic radiation-absorbing pigment in an amount comprised between 0.01 and 3.0 pphw, between 0.02 and 2.0 pphw, between 0.05 and 1.5 pphw, between 0.06 and 1.0 pphw, between 0.07 and 1.0 pphw, or between 0.08 and 0.8 pphw, by weight of the free-radically polymerizable monomers.

12. A cured pressure sensitive adhesive composition obtained by curing the curable precursor according to any of the preceding claims, wherein the curing step is performed by subjecting the curable precursor to a triggering energy selected from the group of thermal energy or actinic radiation.

13. A cured pressure sensitive adhesive composition according to claim 12, which has a residual monomer content of less than 30 wt%, less than 20 wt%, less than 10 wt%, less than 5 wt%, less than 2 wt%, less than less than 1.5 wt%, less than 1.0 wt%, less than 0.8 wt%, less than 0.6 wt%, or even less than 0.4 wt%, when measured according to the test method described in the experimental section.

14. A method of curing a precursor a pressure sensitive adhesive composition, comprising the steps of:
a) providing a curable precursor according to any of claims 1 to 11; and
b) curing the curable precursor, thereby forming a cured pressure sensitive adhesive composition.

15. Use of a curable precursor of a pressure sensitive adhesive according to any of claims 1 to 11 or the cured pressure sensitive adhesive according to any of claims 12 to 13, for construction applications and automotive applications.

## Patentansprüche

1. Ein härtbarer Vorläufer einer Haftkleberzusammensetzung, umfassend:
(1) ein radikalisch polymerisierbares Material, umfassend mindestens ein radikalisch polymerisierbares Monomer;
(2) ein Polymerisationsinitiatorsystem, umfassend:
a) ein thermisches Redoxinitiatorsystem, bestehend aus:
i. einem thermischen Polymerisationsinitiator, umfassend ein organisches Peroxid; und
ii. einem Beschleuniger, ausgewählt sind aus der Gruppe bestehend aus tertiären Aminen, Metallsalzen, Mercaptanen und beliebigen Kombinationen oder Mischungen davon; und
b) einen Photoinitiator; und
wobei das thermische Redoxinitiatorsystem eine Aktivierungstemperatur über der aufweist, bei der es in der Lage ist, bei Erwärmung freie Radikale zu erzeugen und eine Polymerisation des radikalisch polymerisierbaren Materials thermisch zu initiieren, und wobei der härtbare Vorläufer einen Photoinitiator in einer wirksamen Menge umfasst, damit der Photoinitiator bei aktinischer Bestrahlung die Polymerisation des radikalisch polymerisierbaren Materials initiiert und die Temperatur des härtbaren Vorläufers über die Aktivierungstemperatur des thermischen Redoxinitiatorsystems erhöht.

2. Ein härtbarer Vorläufer nach Anspruch 1, wobei das mindestens eine radikalisch polymerisierbare Monomer ein oder mehrere ethylenisch ungesättigte Monomere umfasst.

3. Ein härtbarer Vorläufer nach Anspruch 1 oder 2, wobei das radikalisch polymerisierbare Monomer ausgewählt ist aus der Gruppe bestehend aus (Meth)acrylatestern, (Meth)acrylatmonoestern von Polyhydroxyalkylalkoholen, multifunktionellen (Meth)acrylatestern, macromeren (Meth)acrylaten, (Meth)acrylsäuren und deren Salzen, stickstofftragenden Monomeren, zweibasischen Säuremonomeren, Vinylestern, Styrolen und ringsubstituierten Styrolen, Vinylhalogeniden und Vinylidenhalogeniden, Vinylethern und beliebigen Kombinationen oder Mischungen davon.

4. Ein härtbarer Vorläufer nach einem der vorstehenden Ansprüche, wobei das radikalisch polymerisierbare Monomer ausgewählt ist aus der Gruppe bestehend aus Methyl(meth)acrylat, Ethyl(meth)acrylat, n-Propyl(meth)acrylat, Isopropyl(meth)acrylat, n-Butylacrylat, Isobutylacrylat, tert-Butyl(meth)acrylat, n-Pentyl(meth)acrylat, Isopentyl(meth)acrylat, n-Hexyl(meth)acrylat, Isohexyl(meth)acrylat, Cyclohexyl(meth)acrylat, Phenyl(meth)acrylat, Octyl(meth)acrylat, Isooctyl(meth)acrylat, 2-Octyl(meth)acrylat, 2-Ethylhexyl(meth)acrylat, Decyl(meth)acrylat, Lauryl(meth)acrylat, 2-Propylheptyl(meth)acrylat, Stearyl(meth)acrylat, Isobornylacrylat, Benzyl(meth)acrylat, Octadecylacrylat, Nonylacrylat, Dodecylacrylat, Isophoryl(meth)acrylat, (Meth)acrylatester von 2-Alkylalkanolen, wobei das molare Kohlenstoff-Zahlenmittel der 2-Alkylalkanole 12 bis 32 beträgt, und beliebigen Kombinationen oder Mischungen davon.

5. Ein härtbarer Vorläufer nach einem der vorstehenden Ansprüche, wobei das organische Peroxid ausgewählt ist aus der Gruppe bestehend aus Diacylperoxiden, Dialkylperoxiden, Hydroperoxiden, Ketonperoxiden und beliebigen Mischungen davon.

6. Ein härtbarer Vorläufer nach einem der vorstehenden Ansprüche, wobei der Beschleuniger ausgewählt ist aus der Gruppe von tertiären Aminen, insbesondere jenen, die ausgewählt sind aus der Gruppe bestehend aus tertiären aromatischen Aminen.

7. Ein härtbarer Vorläufer nach Anspruch 6, wobei der Beschleuniger ausgewählt ist aus der Gruppe von tertiären aromatischen Aminen mit der folgenden Formel: 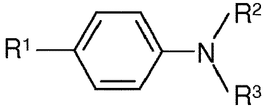 worin
R¹ ein H oder eine C₁-C₄-Alkylgruppe ist,
R² ein H, eine C₁-C₄-Alkylgruppe oder ein Heteroalkyl ist und
R³ mit R² identisch oder unterschiedlich ist und ein H, eine C₁-C₄-Alkylgruppe oder ein Heteroalkyl ist.

8. Ein härtbarer Vorläufer nach einem der vorstehenden Ansprüche, wobei der Photoinitiator ausgewählt ist aus der Gruppe von Photoinitiatoren von Typ (I) (a-Spaltungsmittel).

9. Ein härtbarer Vorläufer nach einem der vorstehenden Ansprüche, wobei der Photoinitiator ausgewählt ist aus der Gruppe bestehend aus Dialkoxyacetophenonen, 2-Phenylacetophenonen, 2,2-Dialkoxy-2-phenylacetophenonen.

10. Ein härtbarer Vorläufer nach einem der vorstehenden Ansprüche, wobei die Aktivierungstemperatur des thermischen Redoxinitiatorsystems unter 100 °C, unter 90 °C, unter 80 °C, unter 60 °C, unter 50 °C, unter 40 °C oder sogar unter 30 °C liegt.

11. Ein härtbarer Vorläufer nach einem der vorstehenden Ansprüche, der ferner ein aktinisches strahlungsabsorbierendes Pigment in einer Menge zwischen 0,01 und 3,0 pphw, zwischen 0,02 und 2,0 pphw, zwischen 0,05 und 1,5 pphw, zwischen 0,06 und 1,0 pphw, zwischen 0,07 und 1,0 pphw oder zwischen 0,08 und 0,8 pphw, bezogen auf das Gewicht der radikalisch polymerisierbaren Monomere, umfasst.

12. Eine gehärtete Haftkleberzusammensetzung, erhalten durch Härten des härtbaren Vorläufers nach einem der vorstehenden Ansprüche, wobei der Härtungsschritt durchgeführt wird, indem der härtbare Vorläufer einer Auslöseenergie, ausgewählt aus der Gruppe von Wärmeenergie oder aktinischer Strahlung, ausgesetzt wird.

13. Eine gehärtete Haftkleberzusammensetzung nach Anspruch 12, die einen Restmonomergehalt von weniger als 30 Gew.-%, weniger als 20 Gew.-%, weniger als 10 Gew.-%, weniger als 5 Gew.-%, weniger als 2 Gew.-%, weniger als 1,5 Gew.-%, weniger als 1,0 Gew.-%, weniger als 0,8 Gew.-%, weniger als 0,6 Gew.-% oder sogar weniger als 0,4 Gew.-%, wenn gemäß dem im Experimentabschnitt beschriebenen Prüfverfahren gemessen wird.

14. Ein Verfahren zum Härten eines Vorläufers einer Haftkleberzusammensetzung, umfassend die Schritte:
a) Bereitstellen eines härtbaren Vorläufers nach einem der Ansprüche 1 bis 11; und
b) Härten des härtbaren Vorläufers, dadurch Bilden einer gehärteten Haftkleberzusammensetzung .

15. Verwendung eines härtbaren Vorläufers eines Haftklebers nach einem der Ansprüche 1 bis 11 oder des gehärteten Haftklebers nach einem der Ansprüche 12 bis 13 für Bauanwendungen und Automobilanwendungen.

## Revendications

1. Précurseur durcissable d'une composition d'adhésif sensible à la pression comprenant :
(1) un matériau polymérisable par radicaux libres comprenant au moins un monomère polymérisable par radicaux libres ;
(2) un système inducteur de polymérisation, comprenant :
a) un système inducteur redox thermique, constitué de :
i. un inducteur de polymérisation thermique comprenant un peroxyde organique ; et
ii. un accélérateur choisi dans le groupe constitué d'amines tertiaires, de sels métalliques, de mercaptans et de toutes combinaisons ou tous mélanges de ceux-ci ; et
b) un photo-inducteur ; et
dans lequel le système inducteur redox thermique a une température d'activation au-dessus de laquelle il est capable de produire des radicaux libres lors du chauffage et d'initier thermiquement la polymérisation du matériau polymérisable par radicaux libres, et dans lequel le précurseur durcissable comprend un photo-inducteur dans une quantité efficace pour que le photo-inducteur, lors d'une irradiation actinique, initie la polymérisation du matériau polymérisable par radicaux libres et augmente la température du précurseur durcissable au-dessus de la température d'activation du système inducteur redox thermique.

2. Précurseur durcissable selon la revendication 1, dans lequel l'au moins un monomère polymérisable par radicaux libres comprend un (des) monomère(s) à insaturation éthylénique.

3. Précurseur durcissable selon la revendication 1 ou 2, dans lequel le monomère polymérisable par radicaux libres est choisi dans le groupe constitué d'esters de (méth)acrylate, de monoesters de (méth)acrylate d'alcools polyhydroxyalkyliques, d'esters de (méth)acrylates multifonctionnels, de (méth)acrylates macromères, d'acides (méth)acryliques et leurs sels, de monomères porteurs d'azote, de monomères d'acides dibasiques, d'esters vinyliques, de styrènes et de styrènes substitués sur le cycle, d'halogénures vinyliques et d'halogénures de vinylidène, d'éthers vinyliques, et de toutes combinaisons ou tous mélanges de ceux-ci.

4. Précurseur durcissable selon l'une quelconque des revendications précédentes, dans lequel le monomère polymérisable par radicaux libres est choisi dans le groupe constitué du (méth)acrylate de méthyle, du (méth)acrylate d'éthyle, du (méth)acrylate de n-propyle, du (méth)acrylate d'isopropyle, de l'acrylate de n-butyle, de l'acrylate d'isobutyle, du (méth)acrylate de tert-butyle, du (méth)acrylate de n-pentyle, du (méth)acrylate d'iso-pentyle, du (méth)acrylate de n-hexyle, du (méth)acrylate d'iso-hexyle, du (méth)acrylate de cyclohexyle, du (méth)acrylate de phényle, du (méth)acrylate d'octyle, du (méth)acrylate d'iso-octyle, du (méth)acrylate de 2-octyle, du (méth)acrylate de 2-éthylhexyle, du (méth)acrylate de décyle, du (méth)acrylate de lauryle, du (méth)acrylate de 2-propylheptyle, du (méth)acrylate de stéaryle, de l'acrylate d'isobornyle, du (méth)acrylate de benzyle, de l'acrylate d'octadécyle, de l'acrylate de nonyle, de l'acrylate de dodécyle, du (méth)acrylate d'isophoryle, d'esters de (méth)acrylate d'alcanols 2-alkyliques, dans lequel la moyenne molaire en nombre de carbone des alcanols 2-alkyliques va de 12 à 32, et toutes combinaisons ou tous mélanges de ceux-ci.

5. Précurseur durcissable selon l'une quelconque des revendications précédentes, dans lequel le peroxyde organique est choisi dans le groupe constitué de peroxydes de diacyle, de peroxydes de dialkyle, d'hydroperoxydes, de peroxydes de cétone et de tous mélanges de ceux-ci.

6. Précurseur durcissable selon l'une quelconque des revendications précédentes, dans lequel l'accélérateur est choisi dans le groupe des amines tertiaires, en particulier celles choisies dans le groupe constitué d'amines aromatiques tertiaires.

7. Précurseur durcissable selon la revendication 6, dans lequel l'accélérateur est choisi dans le groupe des amines aromatiques tertiaires ayant la formule suivante : 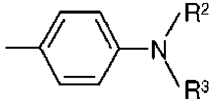 dans laquelle
R¹ est un H ou un groupe alkyle en C₁ à C₄,
R² est un H, un groupe alkyle en C₁ à C₄, ou un hétéroalkyle, et
R³ est identique ou différent de R², et est un H, un groupe alkyle en C₁ à C₄, ou un hétéroalkyle.

8. Précurseur durcissable selon l'une quelconque des revendications précédentes, dans lequel le photo-inducteur est choisi dans le groupe des photo-inducteurs de type (I) (agents de clivage a).

9. Précurseur durcissable selon l'une quelconque des revendications précédentes, dans lequel le photo-inducteur est choisi dans le groupe constitué de dialcoxyacétophénones, de 2-phénylacétophénones, de 2,2-dialcoxy-2-phénylacétophénones.

10. Précurseur durcissable selon l'une quelconque des revendications précédentes, dans lequel la température d'activation du système inducteur redox thermique est en dessous de 100 °C, en dessous de 90 °C, en dessous de 80 °C, en dessous de 60 °C, en dessous de 50 °C, en dessous de 40 °C, voire en dessous de 30 °C.

11. Précurseur durcissable selon l'une quelconque des revendications précédentes, qui comprend en outre un pigment d'absorption de rayonnement actinique en une quantité comprise entre 0,01 et 3,0 pph en poids, entre 0,02 et 2,0 pph en poids, entre 0,05 et 1,5 pph en poids, entre 0,06 et 1,0 pph en poids, entre 0,07 et 1,0 pph en poids, ou entre 0,08 et 0,8 pph en poids, en poids des monomères polymérisables par radicaux libres.

12. Composition d'adhésif sensible à la pression durcie obtenue par durcissement du précurseur durcissable selon l'une quelconque des revendications précédentes, dans laquelle l'étape de durcissement est effectuée en soumettant le précurseur durcissable à une énergie de déclenchement choisie dans le groupe d'une énergie thermique ou d'un rayonnement actinique.

13. Composition d'adhésif sensible à la pression durcie selon la revendication 12, qui a une teneur en monomère résiduel inférieure à 30 % en poids, inférieure à 20 % en poids, inférieure à 10 % en poids, inférieure à 5 % en poids, inférieure à 2 % en poids, inférieure à 1,5 % en poids, inférieure à 1,0 % en poids, inférieure à 0,8 % en poids, inférieure à 0,6 % en poids, voire inférieure à 0,4 % en poids, lorsqu'elle est mesurée selon le procédé de test décrit dans la section expérimentale.

14. Procédé de durcissement d'un précurseur d'une composition d'adhésif sensible à la pression, comprenant les étapes consistant à :
a) fournir un précurseur durcissable selon l'une quelconque des revendications 1 à 11 ; et
b) faire durcir le précurseur durcissable, formant de ce fait une composition d'adhésif sensible à la pression durcie.

15. Utilisation d'un précurseur durcissable d'un adhésif sensible à la pression selon l'une quelconque des revendications 1 à 11 ou de l'adhésif sensible à la pression durci selon l'une quelconque des revendications 12 à 13, pour des applications de construction et des applications automobiles.
